# EUROPEAN PATENT APPLICATION

(11) **EP 4 520 958 A1**
(43) Date of publication of application: **12.03.2025**
(21) Application number: 22940791.1
(22) Date of filing: 04.05.2022
(51) Int. Cl.: F03D 13/10, F03D 80/50

(54) **ALIGNMENT AND INSERTION SYSTEM FOR LOWERING BLADES WITHOUT USING A CRANE**

(71) Applicant: Nabrawind Technologies, S.L., 31002 Pamplona (ES)
(72) Inventor: SANZ PASCUAL, Eneko, 31002 Pamplona (Navarra) (ES); AROCENA DE LA RÚA, Ion, 31001 Pamplona (ES); MONREAL LESMES, Javier, 31180 Zizur Mayor (ES); MAYOR MORENO, Luis Alberto, 28026 Madrid (ES); FERNÁNDEZ GARCÍA, Ana, 28341 Valdemoro (Madrid) (ES); MARTÍ GASTALDO, Juan José, 28017 Madrid (ES)
(86) International application number: PCT/ES2022/070271
(87) International publication number: WO 2023/214097

(57) **Abstract**

System for lowering blades without using a crane, which solves de alignment and insertion problem resulting from the tilt and coning of the blade along the first/last 200-400 mm and the problem of space inside the hub. The system is characterised in that it moves the vertical load of the blade by 90°, converting it into a horizontal load actuated by at least two hydraulic elements (14) and by aligning the centre of gravity (CoG) of the blade vertically with the centre of a bearing by means of cables (5) and pulleys (13 and 21). Each of the systems is disposed inside the hub (1), in the bottom part thereof and secured to the fixed part (19). The system comprises three main parts: the pulley (13), the hydraulic element (14) and an axis-shift element (15) secured with pins, one of the pins being fixed and the other adjustable (22). The cable (5) bordering the end pulley (13) comprises connectors (7) before the point at which same passes through interior pulleys (24), which distribute the load evenly between the two cable (5)

## Description

### Field of invention

The proposed system is suitable to the reduced space inside the hub of a wind turbine and manages to improve the time and the operation costs in the assembly, replacement or repair of the blades without the need for large cranes.

### Background

Document PCT/ES2021/070488 from the same applicant presents an alignment and insertion system where at least one hoist lowers the first 200-400mm of the blade, making it rotate to align the centre of gravity (CoG) displaced by the coning and tilt of the blade. With certain models of wind turbines, the problem of space and line of sight at the bottom of the interior of the hub arises. The hoists used in the alignment and insertion system cannot be installed because there is no hole in the upper part of the hub that has a line of sight with the holes through which the cables will pass, which are responsible for ensuring that the entire load reacts hanging inside the hub.

Other wind turbine models have high coning and tilt angles, which causes the vertical projection of the blade CoG at the bearing level to be displaced, becoming outside the bearing's own circumference. The new system allows the blade to be rotated more easily and the CoG of the blade to be vertically aligned with the centre of the bearing circumference.

The requirements to operate the blade lowering system without the use of a crane presented in the patent are that all the lifting elements used are fixed inside the hub and not on the outside of the wind turbine (outside the hub or in the nacelle) or on the ground next to the tower foundation. The solution presented, which solves the problem of the existing reduced space and the displacement of the CoG, also fits between the hub and the blade, meeting the aforementioned prerequisites.

### Description

It is an object of the invention to have a hydraulic system that rests directly on the inner ring of the bearing that houses the blade that is to be lowered or on the possible elements used for blade extension that can be arranged between the bearing and the blade itself. For the attachment of this new alignment and insertion system, the necessary gap between the hub and the beginning of the blade is minimized to the maximum.

It is another object of the invention to arrange the cylinders of the hydraulic system horizontally because it allows for greater stroke capacity. A vertical position of the aforementioned cylinders would not minimize the space required in the lower part of the hub.

It is another object of the invention that the anchoring of the hydraulic system is carried out through pins that are as tight as possible to the hole that houses them, at least one of which is adjustable.

With the new system, the centre of gravity (CoG) is controlled at all times to alleviate the effect of tilt and coning. The CoG must be controlled and moved comfortably until it is aligned with the gripping points, which is the place where the lifting/lowering system will be connected to the blade.

And finally, it is another object of the invention that the cylinders of the systems are at least two and preferably three: two front and one rear. The alignment of the CoG is done with the two front systems since in this case, the third system will remain prestressed to ensure that no openings occur in the rear support area between blade and bearing.

From all the above described, the following advantages result: The alignment movements that were previously carried out manually by intervening in the chains to raise or lower the blade and align the CoG with the gripping points are now done by operating a hydraulic system that allows, by redirecting the load by 90°, to maintain the same stroke capacity in a much smaller space.

### Brief description of the drawings

A brief description will be given below for a series of drawings useful for better understanding the invention and that expressly relate to an embodiment of said invention that is presented as a non-limiting example thereof.
Figure 1 shows the state of the art.
Figure 2 shows a section of the bottom of the hub and the limiting plate.
Figure 3 shows the layout of the new alignment and insertion systems.
Figure 4 presents a detail of the connection of the cable with the root of the blade.
Figure 5 shows the location of the CoG and its alignment
Figure 6 shows the insertion system and the lowering system.
Figure 7a presents the system with the hydraulic piston extended.
Figure 7b presents the system with the piston retracted and the blade unhooked.
Figure 8 shows a section of part of the new alignment and insertion system.

### Detailed description

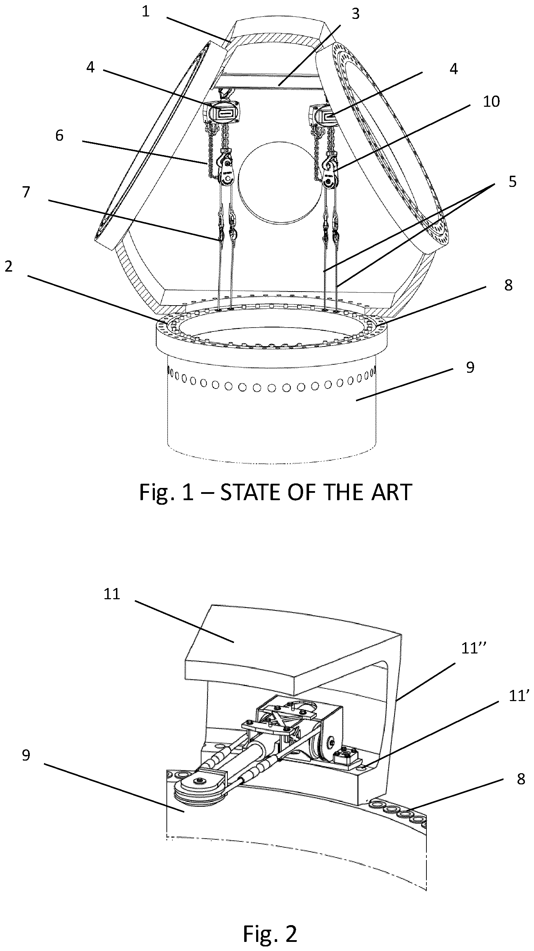

As shown in Figure 1 belonging to the state of the art described in the patent PCT/ES2021/070488, the hub (1) is sectioned and its internal structure is shown. In the upper part of the chassis (2), on the fixed ring at the junction with the upper blades and using an auxiliary beam (3), the alignment and pocket system is anchored formed by at least one hoist and preferably two. Thus, each of the two hoists (4) of the alignment and insertion system has a pair of cables (5) with a set of chains (6) and a connector (7). The biggest requirement is that the cables (5) have to pass through the bearings and anchor in the hole (8) of the T-bolt/blade root insert (9). To achieve this, it is necessary to split the load with some pulleys (10), thus using two cables (5) per hoist (4).

When the fixation and use of hoists (4) inside the hub (1) is not feasible, the new alignment and insertion system object of the patent is used.

Figure 2 shows how the connection between the hub and the blade incorporates a plate (11) that limits the line of sight with the holes (11') through which the cables (5) will pass. In this detailed practical embodiment, the root of the blade (9) with its peripheral bolt holes (8) that are joined by one of its ends to an extension ring (11") that has an upper plate (11) and as shown in the following figure, at the opposite end it is attached to the bearing (12) of the blade.

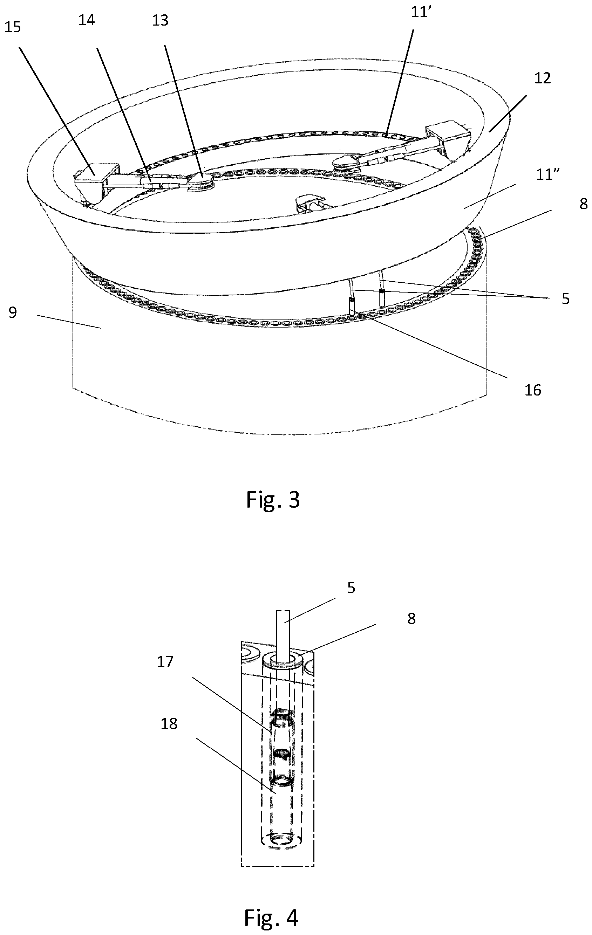

As shown in Figure 3, the plate (11) has been removed to facilitate the view of the different elements of the new system that is anchored in the holes (11') existing on the internal face of the extension ring (11"). In other practical embodiments, the extension ring (11") does not exist and the bearings (12) are in contact with the root of the blade (9).

On the other hand, the new blade alignment and insertion system is made up of three main elements: a pulley (13) at the end, a hydraulic cylinder (14) and an axis-shift element (15) that arranges the load of the blade at 90°. From each of the three systems shown in the figure, two cables (5) extend, passing through the extension ring (11) before being screwed into the insert (8) of the root of the blade (9). Each cable (5) has at its end a connection element (16) that is formed by two pieces threaded together. A truncated-conical piece with a thread inside is the upper piece (17). And the lower piece (18) consists of a threaded cylindrical area with a threaded male protruding. The union is made using the threaded male existing in the cylindrical part (18) and a threaded hole existing inside the truncated-conical part (17), as shown in figure 4.

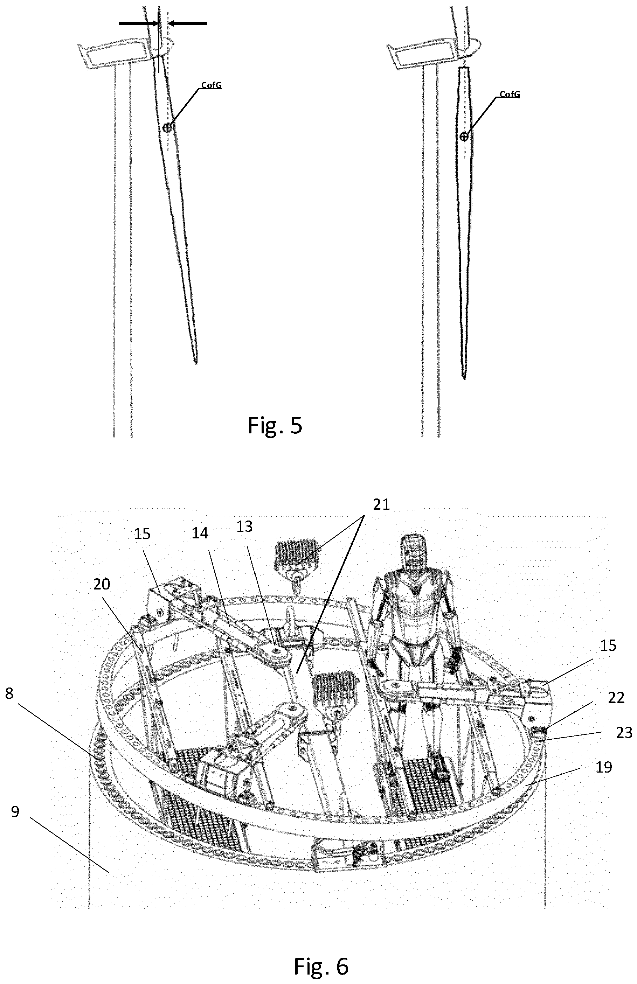

The points where the pairs of cables (5) are placed are approximately 120° each. They are practically aligned and as close as possible to the CoG. In some practical embodiments, the vertical projection of the CoG on the plane of the bearing is outside the circle that forms the root of the blade (9), as is the case presented in Figure 5. The use of the different cables (5) and the load required for each one allows the blade angle to be modified and thus the vertical projection of the CoG until it is aligned with the gripping point.

The axis-shift (15) of the system is necessary since previously the entire ascent/descent stroke during blade alignment was carried out in a vertical direction, implying a need for free height twice the necessary stroke. Now by shifting the direction of the cable (5) by 90° to redirect the ascent/descent stroke during its alignment and insertion, this restriction is released since the system acts in a horizontal direction towards the interior of the blade, an area that is always free of obstacles.

As shown in figure 6, at the connection of the blade to the hub there are two parts: a fixed part (19), which may well be an extension ring or the bearing itself, and the mobile part corresponding to the root of the blade (9). The auxiliary systems for the operators, such as the walkways (20), together with the alignment and insertion system, are anchored in the fixed part (19). Once the CoG is aligned and there is enough space between the fixed part (19) and the root of the blade (9), the lifting/lowering system (21) is mounted.

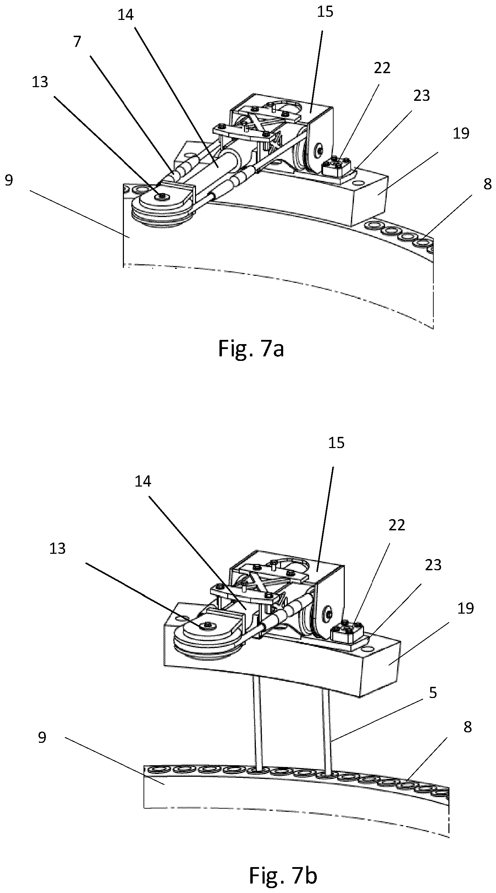

Figures 7a and 7b show how the hydraulic cylinder (14) has a pulley (13) at the end and the cables (5) pass through this pulley (13) so that when the cylinder (14) is extended, the cables (5) hold together the root of the blade (9) and when the cylinder (14) contracts the cables (5) they extend and the root of the blade (9) is detached from the hub or its corresponding extension ring (11).

The anchoring of the alignment and insertion system is carried out through a fixed pin at one end (not shown in the drawing) and an adjustable pin (22) at the opposite end. Once the fixed pin is inserted, the adjustable pin (22) is arranged, which rests on a plate (23) that can move seeking the insertion point of the bearing hole or the extension ring (11).

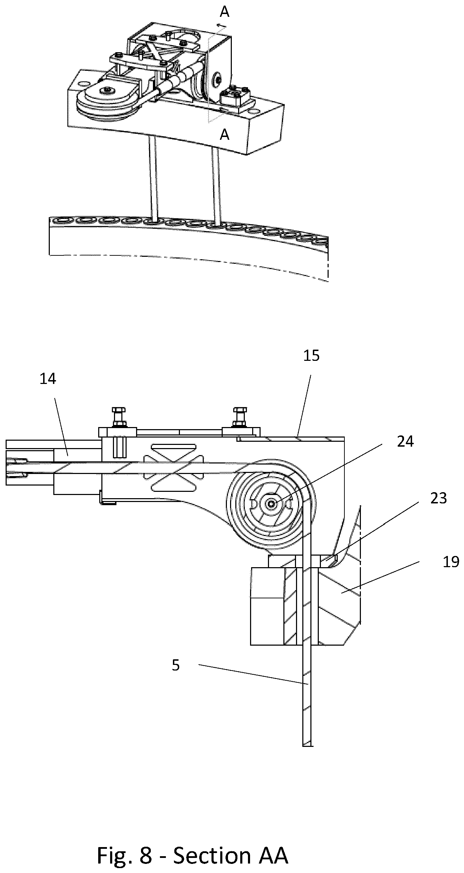

By making a section AA on the axis-shift element (15) shown in figure 7, figure 8 is obtained where the interior is shown in detail. Said axis-shift (15) is formed by internal pulleys (24) that guide the cable (5) and the pulley (13) ensures that both cables (5) support the same load. Outside what constitutes the axis-shift element (15) there is the cylinder (14) at one of its ends and the anchoring pins, one of them on a sliding plate (23). All the parts of the system are metallic and are anchored in the fixed part (19).

## Claims

1. Alignment and insertion system for lowering blades without the use of a crane, which uses hoists (4), pulleys (10) and cables (5), all of which are supported anchored in rigid beams (3) inside the hub (1), **characterized in that**:
- transfers the vertical load of the blade by 90° during its alignment and insertion with strokes of 200-400mm in the lowering/lifting of the blade,
- converts the load horizontally by acting with at least two hydraulic elements (14),
- aligns the CoG of the blade vertically with the centre of the bearing using cables (5) and pulleys (13 and 21),
- all systems are arranged in the lower part of the hub (1), anchored in the fixed part (19) between the hub and the blade and
- each of them comprises three main parts: a pulley (13), a hydraulic element (14) and an axis-shift element (15) wherein:
- the hydraulic element (14) is arranged between a pulley (13) at one end and an axis-shift element (15) arranged at 90° at the other end,
- the axis-shift element (15) is anchored with pins, one of the pins being fixed and the other adjustable (22).
- the cable (5) that borders the pulley (13) at the end has connectors (7) before passing through the inner pulleys (21), to subsequently cross the fixed part (19) of the blade joint and be screwed into the holes (8) of the root of the blade (9) through a connecting element (16).

2. Alignment and insertion system according to the first claim, **characterized in that** the axis-shift element (15) is formed by two internal pulleys (24) that distribute the cable (5) and by the pulley (13) that ensures that both cables (5) support the same load.

3. Alignment and insertion system according to the previous claim, **characterized in that** the adjustable pin (22) that rests on a plate (20), can move seeking the insertion point of the hole (8) of the root of the blade (9) and **in that** the pins are large to be anchored in the holes of the fixed part (19).

4. Alignment and insertion system according to the first claim, **characterized in that** the connection element (16) is formed by two pieces threaded together: a truncated-conical upper piece with a thread inside and a lower piece (18) with a threaded cylindrical area having a protruding male thread.

5. Alignment and insertion system according to the first claim, **characterized in that** once the CoG is aligned and there is sufficient space between the fixed part (19) and the root of the blade (9), a lowering/lifting system (21) is mounted that is fixed at the root of the blade (9).
